# EUROPÄISCHE PATENTANMELDUNG

(11) **EP 1 696 135 A1**
(43) Veröffentlichungstag der Anmeldung: **30.08.2006**
(21) Anmeldenummer: 05002364.7
(22) Anmeldetag: 04.02.2005
(51) Int. Cl.: F04D 29/58, F02C 7/143

(54) **Zwischengekühlter Turboverdichter**

(30) Priorität: 27.01.2005 DE 102005003950
(71) Anmelder: SIEMENS AKTIENGESELLSCHAFT, 80333 München (DE)
(72) Erfinder: Kathol, Ulrich, 47447 Moers (DE)

(57) **Zusammenfassung**

Ein zwischengekühlter Turboverdichter (10) mit mindestens einer Verdichterstufe (12, 14, 16) und einem zugehörigen Kühler 30, 38) ist erfindungsgemäß dadurch gekennzeichnet, dass der Kühler (30, 38) als ein oder mehrere Elemente (60, 62) gestaltet ist, welche im Wesentlichen konzentrisch (64, 66) zu der mindestens einen Verdichterstufe (12, 14, 16) ausgebildet sind.

## Beschreibung

Die Erfindung betrifft einen zwischengekühlten Turboverdichter mit mindestens einer Verdichterstufe und einem zugehörigen Kühler.

Derartige bekannte Turboverdichter sind bisher aus einzelnen Verdichterstufen aufgebaut, die jeweils über beispielsweise eine Sammelspirale und eine Druckleitung mit einem Kühler verbunden sind. Der Kühler weist einen separaten Kühlkessel auf und ist durch eine Saugleitung zur nächsten Verdichterstufe geführt.

Die genannten Elemente, wie Sammelspirale, Druckleitung, Kühlerkessel und Saugleitung, haben im Betrieb des Turboverdichters unterschiedliche Temperaturen und unterschiedliche Wärmeausdehnungen im Raum. Damit entstehen teilweise hohe Reaktionskräfte, wenn die einzelnen Elemente nicht derart verbaut sind, dass Relativ- und Ausgleichbewegungen möglich sind.

Durch Verformungen des Maschinengehäuses eines Turboverdichters kann es ferner zu Problemen mit der Rotordynamik kommen oder zum Anstreifen an den engen Dichtungsspalten in den Verdichterstufen.

Als Maßnahme zur Vermeidung solcher Probleme werden Kompensatoren in den Saug- und Druckleitungen verbaut sowie der Kühler federnd aufgestellt.

Solche Turboverdichter werden jedoch vor allem bei großen Volumenströmen (z.B. mehr als 500 Tm³/h) sehr groß in der Aufstellung. So sind beispielsweise Kühlerkesseldurchmesser von mehr als 3,6 m und Druckleitungsdurchmesser von mehr als 1,8 m erforderlich. Bei Wärmedehnungen von mehr als 10 mm werden zudem auch bei Einsatz von Kompensatoren und einer federnden Aufstellung des Kühlers die Reaktionskräfte auf die Maschine selbst zu groß.

Es wurden zwar bereits verschiedene Konstruktionen vorgeschlagen, um voluminöse zylindrische Kühlerkessel durch andere Geometrien zu ersetzen, wie beispielsweise ein "Doppelkühler" als zylindrischer Druckbehälter mit zentrischer ebener (differenzdruckbelasteter) Zwischenwand, bei all diesen Konstruktionen blieben jedoch Probleme mit Wärmedehnung und Reaktionskräften bestehen. Bei ebenen Wänden bzw. einer Abweichung von der zylindrischen Bauform ergab sich ferner sehr schnell ein erhöhter Materialeinsatz.

Aufgabe der Erfindung ist es einen zwischengekühlten Turboverdichter bereitzustellen, bei dem die oben genannten Problem überwunden und mit möglichst wenig Aufwand in der Entwicklung und Herstellung eine kostengünstige und flexible Konstruktion geschaffen ist.

Diese Aufgabe ist erfindungsgemäß mit einem zwischengekühlten Turboverdichter der eingangs genannten Art gelöst, bei dem der Kühler als ein oder mehrere Elemente gestaltet ist, welche im Wesentlichen konzentrisch zu der Verdichterstufe ausgebildet sind.

Bei dem erfindungsgemäßen Verdichter ist eine besonders kompakte Bauform geschaffen. Mit dieser kompakten Bauform ergibt sich eine Volumen- und Massenreduzierung, wodurch auch insgesamt die Herstellungskosten gesenkt werden können. Ferner können erfindungsgemäß aufgrund der weitgehend konzentrischen Gestalt der Elemente des Turboverdichters insbesondere unterschiedliche Wärmedehnungen sehr gut ausgeglichen werden. Maschinenspannungen werden auf diese Weise vermieden und die Betriebssicherheit wird erhöht.

Das erfindungsgemäße Konzept ist auch bei großen Volumen- bzw. Massenströmen am Turboverdichter einsetzbar und führt aufgrund einer möglichen Einsparung von verbindenden Leitungen sowie von Kompensatoren zu einer erheblichen Kostenreduzierung.

Mit der erfindungsgemäßen Lösung ist die strömungstechnische Gesamtsituation erheblich verbessert und abrupte Querschnittsänderungen sind vermieden. Die Umlenkungen, welche an dem erfindungsgemäß angeordneten Kühler gegebenenfalls vorzusehen sind, führen zu einer besonders günstigen strömungstechnischen Auslegung.

Bei einer bevorzugten Ausführungsform der erfindungsgemäßen Lösung ist der zwischengekühlte Turboverdichter mit mindestens einem Kühler versehen, der als ein einziges bzw. einzelnes Element kreisringförmig insbesondere hinter der Verdichterstufe ausgebildet ist. Der insgesamt kreisringförmig gestaltete Kühler kann dabei zum Ein- und Ausbau Teilungsfugen aufweisen. Vorteilhaft ist eine kreisringförmige Gestalt, weil damit ein großer Volumenbereich im Turboverdichter für den Kühler genutzt und dadurch strömungstechnisch sehr günstige Verhältnisse hergestellt werden können.

Der erfindungsgemäße Kühler ist ferner vorteilhaft derart integriert, dass er radial von außen nach innen durchströmt ist. Ein solche Anordnung ermöglicht eine (Rückführstufen-) Umlenkung um 180° im radial innen gelegenen Bereich des Turboverdichters und damit in jenem Bereich der Anordnung, der geringe bzw. geringste Strömungsgeschwindigkeiten aufweist. Ein geringer Verlust ohne abrupte Querschnittsänderung sind die Folge.

Der erfindungsgemäße Turboverdichter kann im Hinblick auf eine möglichst weitgehende Nutzung bewährter Strukturen und im Hinblick auf eine einfache Integration in bestehende Anlagen besonders vorteilhaft integriert werden, indem die axiale Länge des Kühlers an den herkömmlichen Stufenabstand der mindestens einen Verdichterstufe und die radiale Durchströmtiefe des Kühlers an den zulässigen Druckverlust zwischen zwei Verdichterstufen und/oder das vorgegebene Temperaturprofil angepasst ist. Mit einer solchen Ausgestaltung muss die Typgröße bekannter Verdichter nicht verändert werden. Der zulässige Druckverlust zwischen zwei Verdichterstufen beträgt z.B. 35 mbar an der ersten Stufe, wodurch sich erfindungsgemäß bei einem vorgegebenen Temperaturprofil von z.B. 120 °C zu 35 °C, eine radiale Durchströmlänge von zirka 600 mm ergibt. Darüber hinaus kann erfindungsgemäß eine zusätzliche Einbautiefe für eine Kondensatabscheidung bereitgestellt werden. Als variable Größe zur Anpassung an unterschiedliche Betriebsbedingungen stehen dabei erfindungsgemäß der Außen- bzw. der Innendurchmesser beispielsweise des als kreisringförmiges Element gestalteten Kühlers zur Verfügung.

Erfindungsgemäß ist es ferner von Vorteil, wenn ein den Kühler umschließender Druckbehälter mit einer zylindrischen Wand vorgesehen ist. Mit einem solchen Druckbehälter können die hohen Drücke kostengünstig aufgenommen werden und es können am Kühler parallele Seitenwände zur Verfügung gestellt werden, an denen unterschiedliche Wärmedehnungen möglich sind. Es ergeben sich dadurch keinerlei Zwängungen. Ein als Ring gestalteter erfindungsgemäßer Kühler kann auch vorteilhaft auf dem Innendurchmesser locker zentriert sein und kann sich nach außen beliebig dehnen. Es ist ferner keine zusätzliche Abdichtung der Kühler notwendig, um etwa Bypassströme zu verhindern, da durch die Führung der Strömung zwischen den beiden Seitenwänden jeder Gasstrom von der heißen zur kalten Seite unbedingt durch z.B. Plate-fins strömen muss.

Alternativ oder zusätzlich zu dem oben genannten insgesamt kreisringförmig gestalteten Kühler, kann bei dem erfindungsgemäßen Turboverdichter vorteilhaft auch mindestens ein Kühler mit mehreren einzelnen Elementen vorgesehen sein, welche auf einem zur Verdichterstufe konzentrischen Kreis angeordnet sind. Dabei können als Kühlerelemente beispielsweise konventionelle Plate-fin Kühlerbündel genutzt werden, welche insbesondere tangential zum genannten Kreis ausgerichtet sein sollten. Die Anzahl der Kühlerbündel sollte pro Verdichterstufe bei zirka 4, 6 oder 8 liegen, wobei eine Anzahl von 4 Teilbündeln bzw. Elementen bevorzugt wird. Bei der Anordnung von 4 Elementen insbesondere regelmäßig verteilt auf einer konzentrischen Kreislinie zur Verdichterstufe, kann der radial nicht durchströmte Bereich (d.h. beispielsweise jene Abschnitte am Kreis, an denen keine Strömung durch das Plate-fin Bündel erfolgt) für die Zu- und Abfuhr eines Kühlmediums genutzt werden.

So kann in den genannten Bereichen beispielsweise eine Wasserkammer vorgesehen sein, wobei diese Wasserkammer vorteilhaft zur Versorgung von jeweils zwei der genannten Elemente angepasst ist. Ferner kann an den jeweils der Wasserkammer gegenüberliegenden Enden der einzelnen Elemente eine Umlenkkammer angeordnet sein, mittels der durch die Kühlelemente eine Rückströmung des Kühlmediums erzeugt wird. Die Gefahr von wasserseitigen Kurzschlüssen ist dadurch vermindert.

Besonders vorteilhaft sind an dem erfindungsgemäßen zwischengekühlten Turboverdichter zwei Wasserkammern vorgesehen, von denen im Querschnitt betrachtet eine oben und eine unten angeordnet ist. Auf diese Weise können hinter den genannten Kühler-Elementen Kondensatabscheider angeordnet werden, welche dann zur Kondensatabführung schräg oder senkrecht angeordnet sind.

Insbesondere wenn mehrere Verdichterstufen vorgesehen sind, sollten diese mit einem die zugehörigen Kühler umschließenden Druckbehälter versehen sein, der insbesondere einen einteiligen äußeren zylindrischen Mantel aufweist. Ein solcher Druckbehälter weist keine druckkritische Teilfuge auf und ermöglicht ein Herausziehen des Verdichterbündels sowie ein nachfolgendes Herausheben der Kühlerelemente, ob in Form eines Kreissegments oder in Form eines V-förmigen Kühlerblocks mit 2 Kühlern. Die Montage oder Demontage kann dabei kostengünstig und sicher mittels eines Krans erfolgen. Da bei dem genannten Druckbehälter ferner alle Dichtungen der Seitenwände zum äußeren Mantel auf gleichem Durchmesser sind, ist nur eine leichte Fixierung und Verdrehsicherung der inneren Bauteile des Verdichters notwendig. Auf eine aufwendige Verflanschung kann hingegen verzichtet werden.

Schließlich ist bei dem erfindungsgemäßen zwischengekühlten Verdichter besonders vorteilhaft der mindestens eine Kühler mit mindesten einem Wärmerohr gestaltet. Ein derartiges Wärmerohr wird auch als Heat-pipe bezeichnet und ermöglicht eine räumliche Trennung zwischen dem Ort der Wärmeeinfuhr (z.B. Plate-fin Gaskühlung) und dem Ort der Wärmeabfuhr (z.B. an Kühlwasser). Eine Zuführung von Kühlwasser in den Gasraum des Turboverdichters, mit dem der Bedarf von Einbauvolumen, die Kreuzung mit Gaswegen und/oder die Gefahr des Wasserschlages bei Leckagen einhergehen würde, wird dadurch vermieden. Wärmerohre verbessern zwar nicht den Wärmeaustausch, sind aber nahezu ideale Wärmeleiter und ermöglichen bei der erfindungsgemäßen Lösung sogar eine Ausführung mit integrierter Luftkühlung, was besonders beim Einsatz des Turboverdichters an wasserarmen Einsatzorten von Vorteil sein kann.

Nachfolgend werden Ausführungsbeispiele eines erfindungsgemäßen zwischengekühlten Turboverdichters anhand der beigefügten schematischen Zeichnungen näher erläutert. Es zeigt:
Fig. 1 einen teilweisen Längsschnitt eines ersten Ausführungsbeispiels eines erfindungsgemäßen Turboverdichters,
Fig. 2 einen Querschnitt des Turboverdichters gemäß Fig. 1,
Fig. 3 einen Querschnitt entsprechend Fig. 2 eines zweiten Ausführungsbeispiels eines erfindungsgemäßen Turboverdichters,
Fig. 4 einen Querschnitt entsprechend Fig. 2 eines dritten Ausführungsbeispiels eines erfindungsgemäßen Turboverdichters,
Fig. 5 einen teilweisen Längsschnitt gemäß Fig. 1 eines vierten Ausführungsbeispiels eines erfindungsgemäßen Turboverdichters und
Fig. 6 einen teilweisen Längsschnitt gemäß Fig. 1 eines fünften Ausführungsbeispiels eines erfindungsgemäßen Turboverdichters.

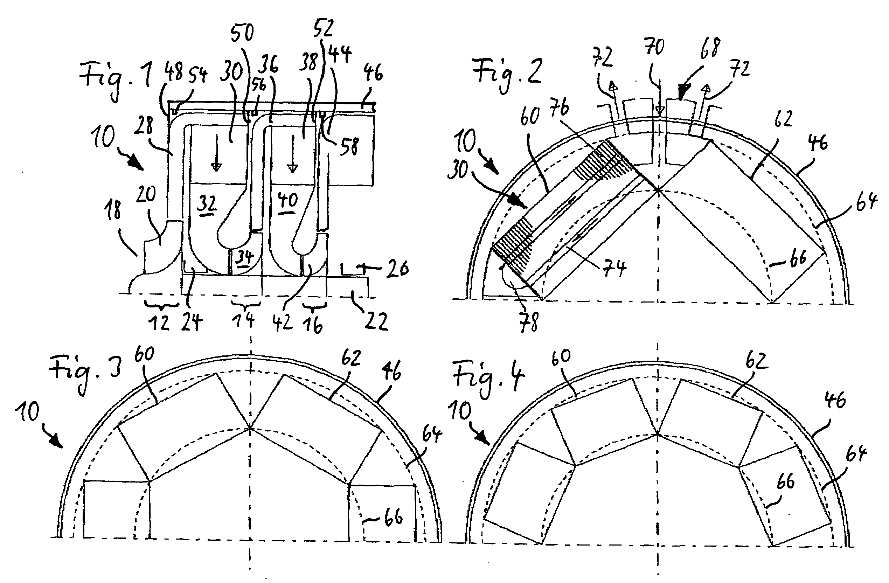

In Fig. 1 ist teilweise ein Längsschnitt eines zwischengekühlten Turboverdichters 10 dargestellt, welcher insgesamt drei Verdichterstufen 12, 14 und 16 aufweist. An der ersten Verdichterstufe 12 ist dabei ein Strömungseinlass 18 vorgesehen, mittels dem Luft als zu verdichtendes Medium zu einem Flügelrad 20 geführt werden kann.

Das Flügelrad 20 ist an einer angetriebenen Welle 22 drehfest angeordnet, welche mittels zweier Lager 24 und 26 drehbar gelagert ist. Bei Drehung der Welle 22 fördert das Flügelrad 20 die zugeführte Luft in einen im Querschnitt im Wesentlichen L-förmigen Diffuser 28, in dem die Luft von ihrer radialen Förderrichtung in eine axiale Strömung umgelenkt wird.

Nachfolgend gelangt die Luft aus dem Diffuser 28 in einen Zwischenkühler 30, welcher, wie nachfolgend noch näher erläutert wird, in besonderer Art und Weise an der zweiten Verdichterstufe 14 angeordnet ist.

Die Luft wird durch den Zwischenkühler 30 hindurch in einen Stufeneinlauf 32 gefördert und durch diesen zu einem Flügelrad 34 der zweiten Verdichterstufe 14 geführt, welches ebenfalls von der Welle 22 angetrieben mit hoher Drehzahl rotiert.

Nachfolgend gelangt die derart komprimierte Luft in die dritte Verdichterstufe 16, welche in entsprechender Weise mit einem Diffuser 36, einem Zwischenkühler 38, einem Stufeneinlauf 40 und einem Flügelrad 42 gestaltet ist. Es folgt ein weiterer Diffuser 44 von weiteren Verdichterstufen, die in dem in Fig. 1 gezeigten Ausschnitt des Längsschnitts nicht mehr dargestellt sind.

Die oben erläuterte Anordnung ist insgesamt von einem Druckbehälter 46 umschlossen, der ohne Teilfugen gestaltet ist. An den Druckbehälter 46 grenzen von innen drei Seitenwände 48, 50 und 52 an, welche im Kontaktbereich jeweils mit einer Dichtung 54, 56 bzw. 58 versehen sind.

Fig. 2 zeigt ein Ausführungsbeispiel der oben bereits erwähnten besonderen Anordnung des Zwischenkühlers 30.

Der in Fig. 2 dargestellte Zwischenkühler 30 ist aus insgesamt vier Kühlerelementen gebildet, von denen in dem gezeigten Halbschnitt lediglich die beiden oberen Kühlerelemente 60 und 62 dargestellt sind.

Die Kühlerelemente sind insgesamt mit ihren Eckpunkten auf zwei zur Achse des Turboverdichters 10 konzentrischen Kreisbahnen 64 und 66 angeordnet, so dass im dargestellten Querschnitt mit den zur Achse gerichteten Innenseiten der Kühlerelemente ein geschlossenes Quadrat gebildet ist.

Im bezogen auf Fig. 2 oberen Abschnitt des Querschnitts ist innerhalb des Druckbehälters 46 zwischen den beiden Kühlerelementen 60 und 62 eine Wasserkammer 68 mit einem Wasserzulauf 70 und zwei Wasserrückläufen 72 vorgesehen. Der Wasserzulauf 70 führt in jedem der Kühlerelemente zu einem Kühlerrohr, welches Wärmeleitrippen bzw. Plate fins 76 des jeweilige Kühlerelements 60 bzw. 62 im Wesentlichen senkrecht durchsetzt.

An der der Wasserkammer 68 entgegensetzten Endseite der Kühlerelemente 60 und 62 ist an diesen jeweils eine Umlenkkammer 78 vorgesehen, mittels denen die durch das Kühlerrohr 74 zugeführte Strömung wieder durch die Plate fins 76 hindurch zum Wasserrücklauf 72 geführt wird.

In den Fig. 3 und 4 sind zwei weitere Ausführungsbeispiele von Turboverdichtern 10 veranschaulicht, welche hinsichtlich der grundsätzlichen Anordnung von Kühlelementen ähnlich dem Ausführungsbeispiel der Fig. 2 aufgebaut sind. Bei diesen Ausführungsbeispielen ist jedoch die Anzahl an Kühlelementen, welche auf den genannten konzentrischen Kreisbahnen insbesondere regelmäßig verteilt sind, auf sechs (Fig. 3) bzw. acht (Fig. 4) Kühlerelemente erhöht (es sind jeweils zwei der Kühlerelemente mit Bezugszeichen 60 bzw. 62 bezeichnet).

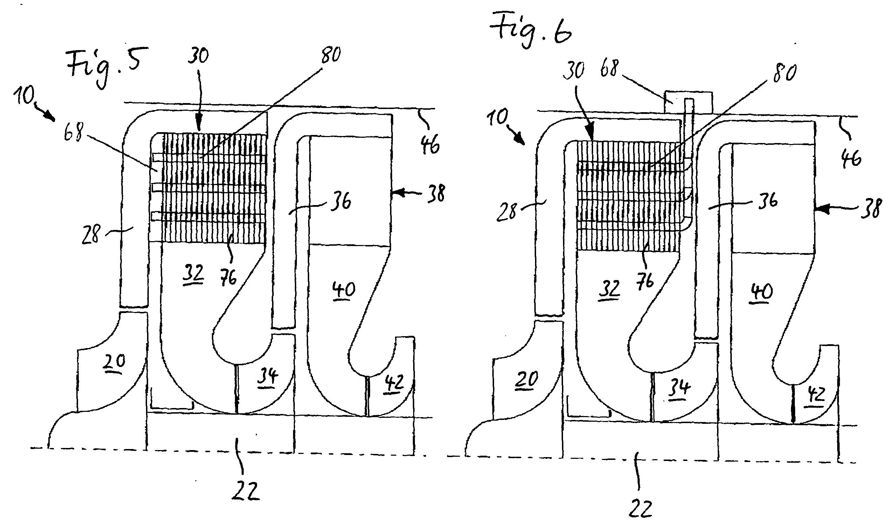

In Fig. 5 und 6 sind zwei Ausführungsbeispiele von Turboverdichtern 10 veranschaulicht, welche hinsichtlich der oben genannten Anordnung der Kühlerelemente 60 bzw. 62 jener Anordnung der Fig. 1 bis 4 entsprechen. Bei den Ausführungsbeispielen der Fig. 5 und 6 sind jedoch innerhalb der Kühlerelemente keine Kühlerrohre im herkömmlichen Sinn vorgesehen, sondern es sind dort Wärmerohre bzw. Heat pipes 80 ausgebildet, mittels denen eine Wärmeaustausch zwischen einer Wasserkammer 68 und den Plate fins 76 erzielt wird.

Dabei ist bei dem Ausführungsbeispiel gemäß Fig. 5 die Wasserkammer 68 axial neben den Kühlelementen angeordnet, während sie bei dem Ausführungsbeispiel gemäß Fig. 6 sich radial außerhalb des Druckbehälters 46 befindet. Dazu sind die Heat pipes 80 bei diesem Ausführungsbeispiel durch die Wandung des Druckbehälters 46 hindurch geleitet.

## Patentansprüche

1. Zwischengekühlter Turboverdichter (10) mit mindestens einer Verdichterstufe (12, 14, 16) und einem zugehörigen Kühler 30, 38),
**dadurch gekennzeichnet, dass** der Kühler (30, 38) als ein oder mehrere Elemente (60, 62) gestaltet ist, welche im Wesentlichen konzentrisch (64, 66) zu der mindestens einen Verdichterstufe (12, 14, 16) ausgebildet sind.

2. Zwischengekühlter Turboverdichter nach Anspruch 1,
**dadurch gekennzeichnet, dass** mindestens ein Kühler (30, 38) als ein Element kreisringförmig insbesondere hinter der Verdichterstufe (12, 14, 16) ausgebildet ist.

3. Zwischengekühlter Turboverdichter nach Anspruch 1 oder 2,
**dadurch gekennzeichnet, dass** der Kühler (30, 38) derart integriert ist, dass er radial von außen nach innen durchströmt ist.

4. Zwischengekühlter Turboverdichter nach einem der vorhergehenden Ansprüche,
**dadurch gekennzeichnet, dass** die axiale Länge des Kühlers (30, 38) an den herkömmlichen Stufenabstand der mindestens einen Verdichterstufe (12, 14, 16) und die radiale Durchströmtiefe des Kühlers (30, 38) an den zulässigen Druckverlust zwischen zwei Verdichterstufen und/oder das vorgegebene Temperaturprofil angepasst ist.

5. Zwischengekühlter Turboverdichter nach einem der vorhergehenden Ansprüche,
**dadurch gekennzeichnet, dass** ein den Kühler (30, 38) umschließender Druckbehälter (46) mit einer zylindrischen Wand vorgesehen ist.

6. Zwischengekühlter Turboverdichter nach einem der vorhergehenden Ansprüche,
**dadurch gekennzeichnet, dass** mindestens ein Kühler (30, 38) mit mehreren einzelnen Elementen (60, 62) gestaltet ist, welche auf einem zur Verdichterstufe (12, 14, 16) konzentrischen Kreis (64, 66) angeordnet sind.

7. Zwischengekühlter Turboverdichter nach Anspruch 6,
**dadurch gekennzeichnet, dass** eine Wasserkammer (68) vorgesehen ist, mit der jeweils zwei der genannten Elemente (60, 62) gemeinsam versorgt sind.

8. Zwischengekühlter Turboverdichter nach Anspruch 7,
**dadurch gekennzeichnet, dass** zwei Wasserkammern (68) vorgesehen sind, von denen im Querschnitt betrachtet eine oben und eine unten angeordnet ist.

9. Zwischengekühlter Turboverdichter nach einem der vorhergehenden Ansprüche,
**dadurch gekennzeichnet, dass** mehrere Verdichterstufen (12, 14, 16) vorgesehen sind und ein die zugehörigen Kühler (30, 38) umschließender Druckbehälter (46) ausgebildet ist, der insbesondere einen einteiligen äußeren zylindrischen Mantel aufweist.

10. Zwischengekühlter Verdichter nach einem der vorhergehenden Ansprüche,
**dadurch gekennzeichnet, dass** der mindestens eine Kühler (30, 38) mit mindesten einem Wärmerohr (80) gestaltet ist.
